# EUROPÄISCHE PATENTANMELDUNG

(11) **EP 1 862 068 A1**
(43) Veröffentlichungstag der Anmeldung: **05.12.2007**
(21) Anmeldenummer: 07009376.0
(22) Anmeldetag: 10.05.2007
(51) Int. Cl.: A01K 39/02

(54) **Tiertränke und Wasserauffangschale für eine Tiertränke**

(30) Priorität: 29.05.2006 DE 202006008589 U
(71) Anmelder: LUBING Maschinenfabrik Ludwig Bening GmbH & Co. KG, 49406 Barnstorf (DE)
(72) Erfinder: von der Assen, Markus, 49439 Steinfeld (DE); Schumacher, Egon, 49406 Barnstorf (DE)
(74) Vertreter: Möller, Friedrich

(57) **Zusammenfassung**

Tiertränken für insbesondere Geflügel verfügen über in regelmäßigen Abständen an einer Wasserversorgungsleitung angeordnete Tränkeventile, wobei jedem Tränkeventil eine Wasserauffangschale (14) zugeordnet ist. Die Wasserauffangschalen (14) sind üblicherweise aus Kunststoff hergestellt. Zum Reinigen der Wasserauffangschalen (14) werden zum Teil aggressive Reinigungsmittel eingesetzt, die den Kunststoff der Wasserauffangschalen (14) beeinträchtigen können.

Die Erfindung sieht vor, den Wasserauffangschalen (14) einen Einsatz (17) aus einem widerstandsfähigen Werkstoff zuzuordnen. Dadurch wird die Wasserauffangschale (14) widerstandsfähig gegen aggressive Flüssigkeiten, insbesondere Reinigungsmittel.

## Beschreibung

Die Erfindung betrifft eine Tiertränke gemäß dem Oberbegriff des Anspruchs 1. Des Weiteren betrifft die Erfindung eine Wasserauffangschale für eine Tiertränke gemäß dem Oberbegriff des Anspruchs 9.

Tiertränken dienen dazu, den Wasserbedarf von insbesondere Geflügel, wie z. B. Hühner, Puten, Gänsen, Enten und auch Küken der genannten Tiere, zu decken. Solche Tiertränken verfügen über mindestens ein Tränkeventil, dem eine Wasserauffangschale zugeordnet ist. Bei sogenannten Strangtränken sind an einer länglichen Wasserversorgungsleitung mehrere Tränkeventile in regelmäßigen Abständen angeordnet, wobei jedem Tränkeventil eine Wasserauffangschale zugeordnet ist. In der Wasserauffangschale sammelt sich vom Tränkeventil abgegebenes Wasser, das von den Tieren nicht sogleich aufgenommen wird.

Die Wasserauffangschalen sind nur relativ geringen mechanischen Beanspruchungen ausgesetzt. Deswegen werden sie aus einem einfachen, preiswerten thermoplastischen Kunststoff, beispielsweise Polypropylen, hergestellt.

Insbesondere unter hygienischen Gesichtspunkten ist es erforderlich, jede Tiertränke in bestimmten Zeitabständen zu reinigen. Vor allem muss eine Reinigung stets erfolgen, wenn eine Umstallung erfolgt, d. h. beispielsweise alte Tiere gegen junge Tiere ersetzt werden. Die Reinigung erfolgt zum Teil mit Reinigungsmitteln, die vor allem dann, wenn ein Rest der mit solchen Reinigungsmitteln versetzten Reinigungsflüssigkeit in der Wasserauffangschale verbleibt, zu einem Aufweichen des Kunststoffs der Wasserauffangschale führt. Wenn nun das Geflügel mit den Schnäbeln an der Wasserauffangschale pickt, hat das dauerhafte Beschädigungen der Wasserauffangschale, insbesondere einer napfförmigen Vertiefung derselben, in der sich die Flüssigkeit sammelt, zur Folge. Vielfach werden so Löcher in die Wasserauffangschale gepickt, wodurch diese unbrauchbar wird.

Der Erfindung liegt nun die Aufgabe zugrunde, eine Tiertränke und eine Wasserauffangschale für eine solche Tiertränke zu schaffen, die auf einfache Weise widerstandsfähig gemacht ist gegen aggressive Flüssigkeiten und Beschädigungen durch die Tiere, insbesondere die Schnäbel von Geflügel.

Eine Tiertränke zur Lösung dieser Aufgabe weist die Merkmale des Anspruchs 1 auf. Durch den Einsatz ist es möglich, die Wasserauffangschale an mindestens einer Stelle gezielt zu verstärken. Dabei ist der Einsatz aus einem widerstandsfähigen Werkstoff gebildet, der vor allem aggressiven Medien dauerhaft standhält, insbesondere nicht aufweicht, so dass vor allem pickende Tiere (Geflügel) die Wasserauffangschale nicht beschädigen können. Es braucht gemäß der Erfindung nicht die gesamte Wasserauffangschale aus einem widerstandsfähigeren und dadurch teureren Werkstoff hergestellt zu werden. Es reicht aus, wenn der Einsatz sich nur über einen ausgewählten Bereich eines Schalenteils der Wasserauffangschale erstreckt, in dem Flüssigkeit mit aggressiven Stoffen über einen längeren Zeitraum hinweg verbleibt.

Es ist weiterhin vorgesehen, den Einsatz aus einem gegen aggressive Flüssigkeiten widerstandsfähigeren Werkstoff gegenüber dem Kunststoff des Schalenteils zu bilden. Das Schalenteil kann dadurch aus einem einfachen, preiswerten Kunststoff, insbesondere thermoplastischen Kunststoff, gebildet sein. Nur der sich mindestens über einen Teil des Schalenteils erstreckende Einsatz braucht aus einem hochwertigeren Werkstoff gefertigt zu sein.

Bei einer bevorzugten Ausgestaltung der Tiertränke ist der Einsatz im Schalenteil angeordnet, wobei er sich vorzugsweise nur über einen unteren Teilbereich des Schalenteils erstreckt. Durch die Anordnung des Einsatzes im Schalenteil nimmt der Einsatz diejenige Flüssigkeit auf, die sich im Schalenteil der Wasserauffangschale sammelt bzw. hierbei nach der Reinigung der Tiertränke verbleibt. Dadurch schützt der Einsatz das Schalenteil vor aggressiven Medien, insbesondere einer aggressiven Flüssigkeit. Dazu reicht es aus, wenn der Einsatz sich nur über einen unteren Bereich des Schalenteils erstreckt, weil sich die Flüssigkeit, aber vor allem Restflüssigkeit, in diesem unteren Teil der Wasserauffangschale sammelt.

Weiterhin ist vorgesehen, den Einsatz auf einer Innenseite des Schalenteils anzuordnen und hiermit zu verbinden. Durch die Verbindung des Einsatzes mit der Innenseite des Schalenteils ist der den Einsatz von außen umgebende Bereich des Schalenteils vor aggressiven Medien, insbesondere Wasch- bzw. Reinigungsflüssigkeiten, geschützt. Vorzugsweise ist die Außenseite des Einsatzes der Innenseite des Schalenteils vollflächig verbunden. Das kann durch vollflächiges Kleben erfolgen, zweckmäßigerweise aber durch außenseitiges Umspritzen des Einsatzes mit dem Kunststoff des Schalenteils bei der Herstellung der Wasserauffangschale. Auf diese Weise ist eine vollständige Abdichtung zwischen der Außenseite des Einsatzes und der Innenseite des Schalenteils gewährleistet, wodurch verhindert wird, dass irgendwelche Flüssigkeiten, insbesondere mit aggressiven Stoffen, über die Außenseite des Einsatzes an den von diesem zu schützenden Bereich des Schalenteils gelangt und diesen beeinträchtigen, insbesondere aufweichen, könnte.

Gemäß einer bevorzugten Weiterbildung der Erfindung weist das Schalenteil eine napf- bzw. becherartige Vertiefung zur Aufnahme eines Wasservorrats auf, wobei der Einsatz korrespondierend zur Vertiefung, also ebenfalls becher- oder napfartig, ausgebildet ist. Es reicht, wenn sich der Einsatz nur über einen unteren Teil der napfartigen Vertiefung des Schalenteils erstreckt, obwohl sich der Einsatz bei Bedarf auch über die Innenseite der gesamten napfartigen Vertiefung des Schalenteils erstrecken kann. Der napfartige Einsatz bildet eine innere Doppelwandung der napfartigen Vertiefung und schützt diese dort, wo erfahrungsgemäß über längere Zeit aggressive Medien in der Vertiefung verbleiben. Entsprechend des zu erwartenden Höhenniveaus der in der Wasserauffangschale verbleibenden aggressiven Flüssigkeit ist der Einsatz bemessen, indem er sich nur über einen solchen unteren Bereich der napfartigen Vertiefung des Schalenteils der Wasserauffangschale erstreckt, indem maximal restliche Flüssigkeit, insbesondere restliche Waschflüssigkeit, nach dem Spülen der Tiertränke verbleibt. Der Einsatz braucht sich dadurch nur über den notwendigen Teil der napfartigen Vertiefung zu erstrecken, wobei im Übrigen die napfartige Vertiefung wie das übrige Schalenteil aus Kunststoff gebildet ist, der gegen aggressive Medien nicht widerstandsfähig zu sein braucht.

Bevorzugt ist vorgesehen, dem unteren Teil der Vertiefung des Schalenteils im Bereich des Einsatzes mit einer um die Wandstärke des Einsatzes reduzierten Wandstärke zu versehen. Die gesamte Wandstärke der Vertiefung im Bereich des Einsatzes ist dann etwa genauso groß wie die Wandstärke der Vertiefung bzw. des Schalenteils oberhalb des Einsatzes. Dadurch schließt die Innenseite des Einsatzes etwa bündig mit der Innenseite der Vertiefung bzw. des Schalenteils oberhalb des Einsatzes ab, wodurch der Einsatz im Wesentlichen übergangslos in das Schalenteil der Wasserauffangschale integriert ist und Absätze, woran sich Rückstände oder Verschmutzungen festsetzen könnten, im Wesentlichen vermieden werden.

In der Regel reicht es aus, dass sich der Einsatz nur über etwa ein unteres Fünftel bis zur unteren Hälfte der Gesamttiefe der napfartigen Vertiefung der Wasserauffangschale erstreckt. Erfahrungsgemäß sammeln sich aggressive Flüssigkeiten, insbesondere Reste von Waschflüssigkeiten, nur in einem unteren Teil der becher- oder napfartigen Vertiefung, füllen diese also nur zum Teil aus.

Die Wandstärke des Einsatzes beträgt etwa ein Viertel bis die Hälfte, vorzugsweise etwa ein Drittel, der Wandstärke der Wasserauffangschale im Bereich der napfartigen Vertiefung. Der Einsatz verfügt dadurch über eine nur verhältnismäßig geringe Wandstärke. Diese reicht bei entsprechenden Materialien des Einsatzes aus, um den Kunststoff des Schalenteils zu schützen. Aufgrund der geringen Wandstärke ist der Einsatz preisgünstig herzustellen, auch wenn er aus einem verhältnismäßig hochwertigen Werkstoff besteht. Außerdem lässt sich ein solcher dünnwandiger Einsatz gut in das Schalenteil integrieren, weil die Wandstärke des Schalenteils, insbesondere im Bereich des Einsatzes, nur geringfügig verringert werden muss, um den Einsatz bündig in die napfartige Vertiefung der Wasserauffangschale einzubetten, ohne dass die Wandstärke im Bereich des Einsatzes vergrößert werden muss.

Als Material für den jeweiligen Einsatz kommen Stahl, vorzugsweise Edelstahl bzw. rostfreier Edelstahl, aber auch Aluminium oder Keramik in Betracht. Außerdem ist es denkbar, den Einsatz aus einem chemikalienbeständigen, insbesondere laugen- und/oder säurebeständigen, Kunststoff zu bilden. Auch wenn es sich bei den genannten Materialien um hochwertige Werkstoffe handelt, verteuern diese die Wasserauffangschale unwesentlich, weil der Einsatz zum einen dünnwandig ist und zum anderen sich nur über denjenigen Bereich der napfartigen Vertiefung der Wasserauffangschale erstreckt, in dem üblicherweise Rückstände des Waschmittels bei der Reinigung der Tiertränke zurückbleiben und somit der Einsatz sich nicht über die gesamte Innenwandfläche der napfartigen Vertiefung der Wasserauffangschale erstrecken muss, sondern nur über einen trichterförmig zulaufenden unteren Bereich verhältnismäßig kleiner Fläche.

Eine Wasserauffangschale zur Lösung der eingangs genannten Aufgabe weist die Merkmale des Anspruchs 9 auf. Demnach ist vorgesehen, dem Schalenteil der Wasserauffangschale mindestens einen Einsatz oder auch eine Einlage aus einem widerstandsfähigen Material zuzuordnen. Der Einsatz oder die Einlage schützt das übrige Schalenteil vor aggressiven Medien, beispielsweise Wasch- oder Reinigungsmittel. Das Schalenteil im Übrigen braucht deshalb nicht resistent gegen solche aggressiven Substanzen zu sein. Auf diese Weise ist die Wasserauffangschale örtlich, nämlich dort, wo es erforderlich ist, mit einer schützenden, inneren Doppelwandung versehen. Das gesamte Schalenteil der Wasserauffangschale kann dadurch aus einem preisgünstigen Werkstoff, vorzugsweise Kunststoff, hergestellt sein.

Weitere Ausgestaltungen der Wasserauffangschale entsprechen einzelnen oder einer Kombination mehrerer zuvor erläuterter Merkmale der Tiertränke. Hierauf wird Bezug genommen.

Ein bevorzugtes Ausführungsbeispiel der Erfindung wird nachfolgend anhand der Zeichnung näher erläutert. In dieser zeigen:

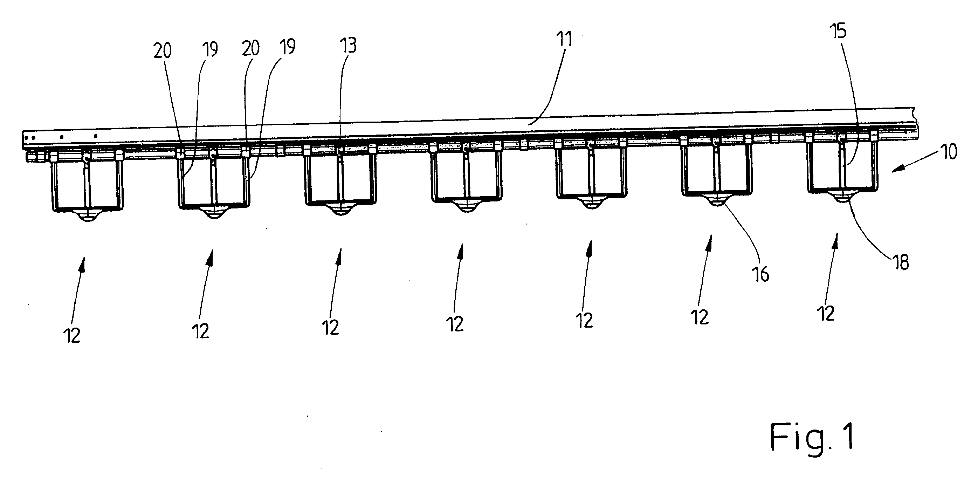

Fig. 1 eine Seitenansicht eines Teils einer Tiertränke,
Fig. 2 einen vertikalen Schnitt durch eine Wasserauffangschale der Tiertränke der Fig. 1,
Fig. 3 eine vergrößerte Einzelheit der Wasserauffangschale der Fig. 2,
Fig. 4 eine Seitenansicht der Wasserauffangschale der Fig. 2 und 3, und
Fig. 5 eine Draufsicht der Wasserauffangschale der Fig. 2 bis 4.

Die Figuren zeigen eine Tiertränke, die als sogenannte Strangtränke zur Bodenhaltung von Geflügel ausgebildet ist. Diese Strangtränke ermöglicht es allen Arten von Geflügel, insbesondere auch Küken, den Wasserbedarf selbsttätig zu decken. Die Erfindung eignet sich aber nicht nur für die gezeigte Strangtränke sondern für Tiertränken aller Art, sofern diese mindestens eine Wasserauffangschale aufweisen.

Die in den Figuren gezeigte Tiertränke (Strangtränke) verfügt über eine langgestreckte, rohrartige Wasserversorgungsleitung 11. Die Wasserversorgungsleitung 11 ist mit mehreren, voneinander beabstandeten Tränkestellen 12 versehen, die im vorliegenden Fall allesamt gleich ausgebildet sind. Die Wasserversorgungsleitung 11 ist an nicht gezeigten Tragseilen in einem Stall horizontal gerichtet oder leicht geneigt mit entsprechendem (geringem) Abstand zum Boden angeordnet.

In die Wasserversorgungsleitung 11 sind bei der hier gezeigten Strangtränke in regelmäßigen Abständen Tränkeventile 13 von unten eingesetzt. Es handelt sich hierbei um an sich bekannte Tränkeventile 13 mit einem teilweise ein Außengewinde aufweisendes Gehäuse zum Einschrauben in eine entsprechende Gewindebohrung der Wasserversorgungsleitung 11. Die vorzugsweise untereinander gleich ausgebildeten Tränkeventile 13 weisen einen teilweise unten aus dem Gehäuse herausragenden Ventilstift auf. Das aus dem Gehäuse herausragende untere Ende des Ventilstifts ist von den Tieren, insbesondere ihren Schnäbeln, frei zugänglich. Durch Anheben und/oder Verkippen des Ventilstifts kann das jeweilige Tränkeventil 13 geöffnet werden, so dass von der Wasserversorgungsleitung 11 den Tränkeventilen 13 zugeführtes Wasser in dosierten Mengen unten aus den Tränkeventilen 13 austreten kann.

Jede Tränkestelle 12 weist zusätzlich zum Tränkeventil 13 noch eine Wasserauffangschale 14 auf. Die im gezeigten Ausführungsbeispiel gleich ausgebildeten Wasserauffangschalen 14 aller Tränkestellen 12 sind mittig mit Abstand unter den Tränkeventilen 13 angeordnet.

Bei der in den Figuren gezeigte Strangtränke weist jede Tränkestelle 12 noch ein schwenkbar mit der Wasserversorgungsleitung 11 verbundenes Betätigungsrohr 15 auf, das bis in die Wasserauffangschale 14 reicht. Das Betätigungsrohr 15 ist derart an den Ventilstift des jeweiligen Tränkeventils 13 angekoppelt, dass durch Verschwenken des Betätigungsrohrs 15 das Tränkeventil 13 geöffnet wird und auf diese Weise durch das Betätigungsrohr 15 Wasser aus dem Tränkeventil 13 in die Wasserauffangschale 14 fließt. Die Erfindung ist aber nicht auf Strangtränken mit einem Betätigungsrohr 15 in jeder Tränkestelle 12 beschränkt; vielmehr bezieht sich die Erfindung auch auf Strangtränken, die über kein Betätigungsrohr 15 zwischen dem jeweiligen Tränkeventil 13 und der Wasserauffangschale 14 verfügen, bei denen das Wasser aus dem Tränkeventil 13 direkt in die darunter angeordnete Wasserauffangschale 14 fließt.

In erfindungsgemäß besonderer Weise sind die Wasserauffangschalen 14 der gezeigten Strangtränke ausgebildet. Demzufolge bezieht sich die Erfindung nicht nur auf die gezeigte Strangtränke, sondern auf alle Arten von Tiertränken, beispielsweise mit nur einer Tränkestelle 12 und auch nur einer Wasserauffangschale 14.

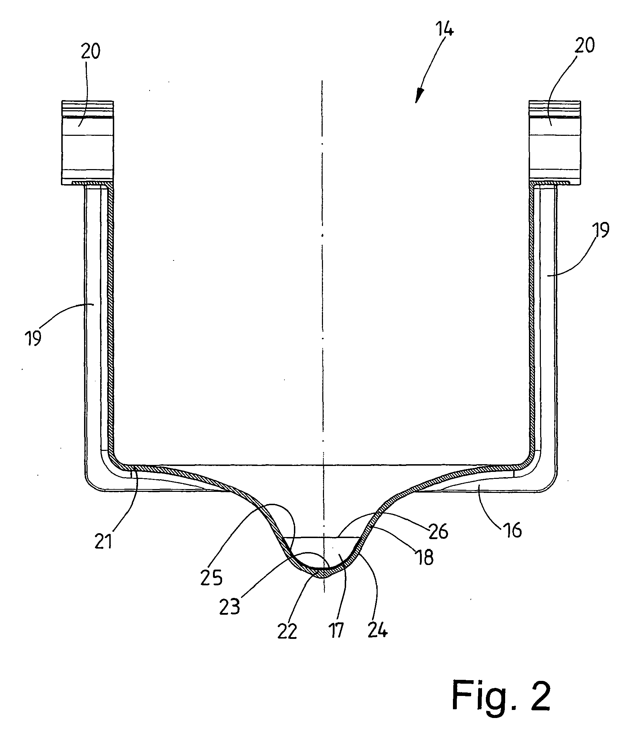

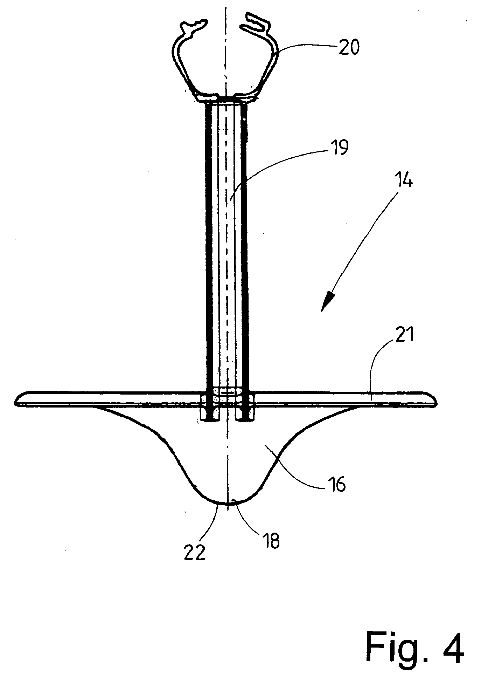

Die in den Fig. 2 bis 5 gezeigte Wasserauffangschale 14 weist ein Schalenteil 16 und einen Einsatz 17 auf. Das Schalenteil 16 ist einstückig gebildet aus einer trog- oder napfartigen Vertiefung 18 zur Aufnahme eines Wasservorrats, zwei parallelen Tragarmen 19 und einen Clipverschluss am oberen Ende jedes Tragarms 19. Das ganze Schalenteil 16, also die Vertiefung 18, die Tragarme 19 und die Clipverschlüsse 20, sind aus thermoplastischem Kunststoff, vorzugsweise Polypropylen, hergestellt, und zwar im Spritzgussverfahren.

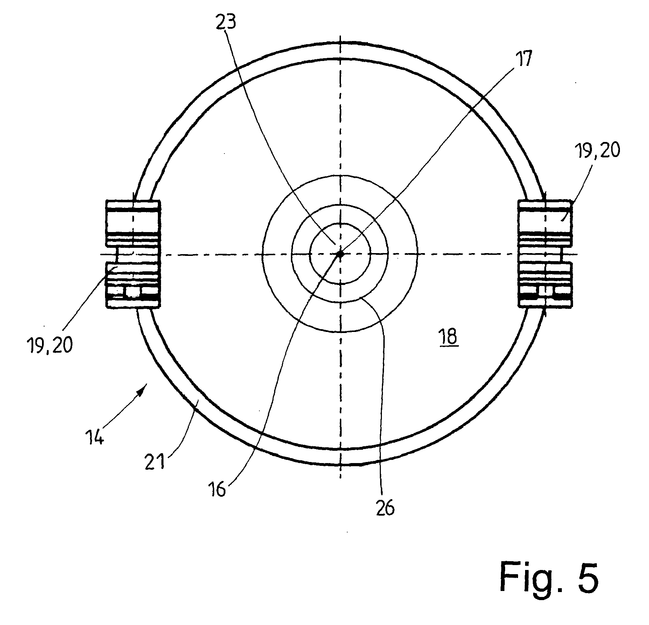

Die napfartige Vertiefung 18 ist bei der hier gezeigten Wasserauffangschale 11 rotationssymmetrisch ausgebildet mit einem kreisrunden Rand 21 (Fig. 5). Die napfartige Vertiefung 18 verjüngt sich etwa kegelförmig nach unten in Richtung zu ihrem leicht gewölbten Boden 22. Die Vertiefung 18 kann aber auch über beliebige andere Gestaltungen, insbesondere unrunde Grundrisse, beispielsweise mit ovalem Rand, und andere Querschnitte aufweisen. An gegenüberliegenden Seiten des Randes 21 der Vertiefung 18 sind gegenüber dem Rand 21 etwa senkrecht nach oben abstehende, parallele Tragarme 19 angeordnet. Alternativ kann die Wasserauffangschale nur über einen einzigen Tragarm verfügen. Die gleich ausgebildeten Clipverschlüsse 20 an den oberen Enden der Tragarme 19 dienen dazu, die Wasserauffangschale 14 lösbar an der Wasserversorgungsleitung 11 zu befestigen. Dann umgreift der jeweilige geschlossene Clipverschluss 20 die Wasserversorgungsleitung 11.

Im Schalenteil 16 der Wasserauffangschale 14 ist erfindungsgemäß der Einsatz 17 angeordnet. Vor allem Wasserauffangschalen mit mehreren Vertiefungen 18 können über mehrere Einsätze verfügen.

Im gezeigten Ausführungsbeispiel ist der Einsatz 17 in der Vertiefung 18 angeordnet. Der Einsatz 17 befindet sich im Bereich des Bodens 22 der Vertiefung 18 und erstreckt sich nur über einen Teil der vom Boden 22 ausgehenden Innenseite der Seitenwandung der Vertiefung 18, und zwar einem unteren Teil. Der Einsatz 17 verfügt über eine Kontur, die mit demjenigen Teil der Vertiefung 18, dem der Einsatz 17 zugeordnet ist, korrespondiert. Dort, wo sich der Einsatz 17 in der Vertiefung 18 befindet, ist die Wandung der Vertiefung 18 in der Dicke (Wandstärke) reduziert, und zwar um die Wandstärke des wie die Vertiefung 18 rotationssymmetrischen, napfförmigen Einsatzes 17. Die gesamte Wandstärke der Vertiefung 18 ist demzufolge im Bereich des Einsatzes 17 etwa genauso groß wie im Bereich oberhalb des Einsatzes 17. Der napfförmige Einsatz 17 ist wie die Vertiefung 18 mit einem geschlossenen Boden 23 versehen, der über den Boden 22 der Vertiefung 18 liegt. Die Außenkontur des Einsatzes 17 entspricht demzufolge der Innenkontur der Vertiefung 18 im Bereich des Einsatzes 17.

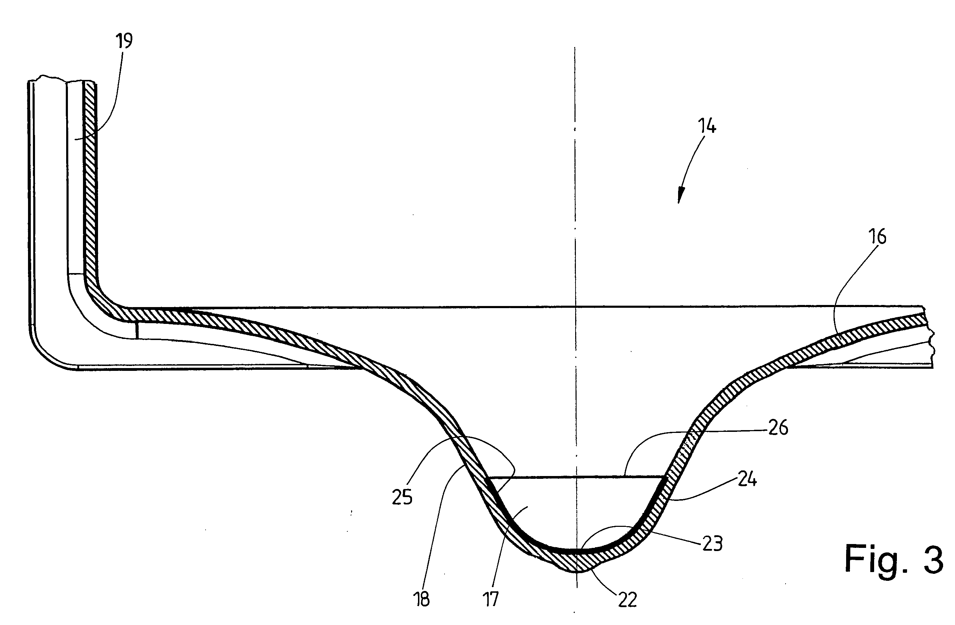

Der Einsatz 17 ist vollflächig fest mit der Innenseite 25 der Vertiefung 18 verbunden. Das geschieht bevorzugt bei der Herstellung der Wasserauffangschale 14 im Spritzgießverfahren, indem der Einsatz 17 vor dem Spritzgießen in die Spritzgussform eingelegt und dann in der Spritzgussform vom thermoplastischen Kunststoff zur Bildung des Schalenteils 16 umspritzt wird. Dabei kommt es zu einer dauerhaften, innigen Verbindung der Außenseite 24 des Einsatzes 17 mit der Innenseite 25 der Vertiefung 18, wodurch keine Flüssigkeit zwischen den Einsatz 17 und die Vertiefung 18 gelangen kann. Alternativ kann der Einsatz 17 in der Vertiefung 18 verklebt werden. In einem solchen Falle braucht die Wandstärke der Vertiefung 18 im Bereich des Einsatzes 17 nicht reduziert zu sein, so dass die Wasserauffangschale 14 im Bereich des Einsatzes 17 über eine um die Decke des Einsatzes 17 vergrößerte Wandstärke verfügt, also ein oberer Rand 26 des Einsatzes 17 nicht, wie in der Fig. 3 anschaulich dargestellt, nahtlos zum über den Einsatz 17 liegenden oberen Bereich der Vertiefung 18 übergeht.

Im gezeigten Ausführungsbeispiel ist der Einsatz 17 nur einem unteren Teil der Vertiefung 18 zugeordnet, indem sich der Einsatz 17 nur über etwa ein unteres Drittel der Gesamttiefe der Vertiefung 18 erstreckt. Bei Bedarf kann der Einsatz 17 aber auch höher sein, indem er sich über die Hälfte bis hin zu drei Viertel der Höhe der Vertiefung 18 erstreckt. Es ist auch denkbar, den Einsatz 17 niedriger auszubilden, indem er sich nur über eine Fünftel der Höhe der Vertiefung 18 erstreckt. Die Wandstärke des Einsatzes 17 beträgt etwa ein Viertel bis zur Hälfte der Wandstärke der Vertiefung 18 oberhalb des Einsatzes 17. Vorzugsweise beträgt die Wandstärke des Einsatzes 17 etwa ein Drittel der Wandstärke der Vertiefung 18. Wenn z. B. die Vertiefung 18 außerhalb des Bereichs des Einsatzes 17 eine Wandstärke von 2,5 mm aufweist, beträgt die Wandstärke des Einsatzes 17 nur etwa 0,75 mm. Die Wandstärke des Einsatzes 17 kann aber auch geringer sein, indem sie beispielsweise nur 0,5 mm beträgt. Ebenso sind Ausgestaltungen der Wasserauffangschale 14 denkbar, wobei der Einsatz 17 eine Wandstärke von bis zu 1 mm aufweist.

Als Material für den Einsatz 17 kommt besonders rostfreier Edelstahl in Betracht. Darüber hinaus ist aber auch anderer Edelstahl oder gewöhnlicher Schwarzstahl denkbar. Ebenfalls eignet sich als Material für den Einsatz 17 auch Aluminium oder ein Keramikwerkstoff. Schließlich ist es auch denkbar, den Einsatz 17 aus einem chemikalienbeständigen Kunststoff, insbesondere einem Kunststoff, der lauge- und/oder säurebeständig ist, herzustellen.

Durch den mindestens einen Einsatz 17 im Schalenteil 16 der Wasserauffangschale 14 wird erreicht, dass aggressive Substanzen, beispielsweise Waschmittel enthaltende Flüssigkeiten, und vor allem der vielfach in der Wasserauffangschale 14 nach dem Reinigen zurückbleibende Flüssigkeitsrest, den thermoplastischen Kunststoff der Wasserauffangschale 14 nicht aufweicht. Der nach dem Reinigen der Wasserauffangschale 14 bzw. der Tiertränke in der Vertiefung 18 der jeweiligen größeren Wasserauffangschale 14 verbleibende Flüssigkeitsrest füllt in der Regel nur den Einsatz 17 aus, wobei der Einsatz 17 eine solche Höhe aufweist, dass mit Sicherheit die verbleibende Restflüssigkeit in der Vertiefung 18 sich nicht über den Bereich des Einsatzes 17 hinaus erstreckt. Da der Einsatz 17 aus den zuvor geschilderten besonderen Materialien, die insbesondere widerstandsfähig gegen aggressive Stoffe sind, hergestellt ist, kann der nur im Bereich des Einsatzes 17 zurückbleibende Flüssigkeitsrest den Kunststoff des Schalenteils 16 nicht mehr aufweichen. Deshalb besteht auch nicht mehr die Gefahr, dass die Tiere mit ihren Schnäbeln vor allem die Vertiefung 18 der Wasserauffangschale 14 beschädigen oder gar durchstoßen, weil erfindungsgemäß der Einsatz 17, der gegen aggressive Stoffe widerstandsfähig ist, dieses verhindert.

Die Erfindung eignet sich für Wasserauffangschalen jeglicher Art und Größe ebenso wie für beliebige Tiertränken mit mindestens einer Wasserauffangschale und nicht nur die dargestellte Strangtränke.

### Bezugszeichenliste:

- 10: Wasserauffangschale
- 11: Wasserversorgungsleitung
- 12: Tränkestelle
- 13: Tränkeventil
- 14: Wasserauffangschale
- 15: Betätigungsrohr
- 16: Schalenteil
- 17: Einsatz
- 18: Vertiefung
- 19: Tragarm
- 20: Clipverschluss
- 21: Rand
- 22: Boden
- 23: Boden
- 24: Außenseite
- 25: Innenseite
- 26: oberer Rand

## Patentansprüche

1. Tiertränke für insbesondere Geflügel, wie Hühner, Puten, Enten, Gänse, Küken oder dergleichen, mit mindestens einem Tränkeventil (13) und einer dem wenigstens einen Tränkeventil (13) zugeordneten Wasserauffangschale (14), **dadurch gekennzeichnet, dass** die Wasserauffangschale (14) aus einem Schalenteil (16) und mindestens einem mit dem Schalenteil (16) verbundenen Einsatz (17) aus einem widerstandsfähigen Werkstoff gebildet ist.

2. Tiertränke nach Anspruch 1, **dadurch gekennzeichnet, dass** das Schalenteil (16) aus Kunststoff und der Einsatz (17) aus einem gegen aggressive Flüssigkeit widerstandsfähigeren Werkstoff als der Kunststoff des Schalenteils (16) gebildet ist.

3. Tiertränke nach Anspruch 1 oder 2, **dadurch gekennzeichnet, dass** der Einsatz (17) im Schalenteil (16) angeordnet ist, vorzugsweise sich nur über einen unteren Bereich des Schalenteils (16) erstreckt, vorzugsweise der Einsatz (17) auf einer Innenseite des Schalenteils (16) angeordnet und mit dem Schalenteil (16) insbesondere vollflächig verbunden ist, beispielsweise durch Verkleben und/oder Anspritzen.

4. Tiertränke nach einem der vorhergehenden Ansprüche, **dadurch gekennzeichnet, dass** das Schalenteil (16) eine napfartige Vertiefung (18) zur Aufnahme eines Wasservorrats aufweist, wobei der Einsatz (17) sich nur über einen unteren Bereich der Vertiefung (18) erstreckt und vorzugsweise der Einsatz (17) eine mit der napfartigen Gestalt der Vertiefung (18) korrespondierende Gestalt aufweist.

5. Tiertränke nach Anspruch 4, **dadurch gekennzeichnet, dass** der untere Teil der napfartigen Vertiefung (18) im Bereich des Einsatzes (17) eine um die Wandstärke des Einsatzes (17) reduzierte Wandstärke aufweist, derart, dass eine Innenseite des Einsatzes (17) mit einer Innenseite der Vertiefung (18) oberhalb des Einsatzes (17) etwa bündig abschließt.

6. Tiertränke nach Anspruch 4 oder 5, **dadurch gekennzeichnet, dass** der Einsatz (17) sich nur über etwa ein unteres Fünftel der Gesamttiefe der Vertiefung (18) erstreckt.

7. Tiertränke nach einem der Ansprüche 4 bis 6, **dadurch gekennzeichnet, dass** der Einsatz (17) eine Wandstärke aufweist, die etwa einem Viertel bis zur Hälfte, vorzugsweise etwa einem Drittel, der Wandstärke der Vertiefung (18) entspricht, vorzugsweise die Wandstärke des Einsatzes (17) 0,5 mm bis 1 mm beträgt, insbesondere 0,7 mm bis 0,8 mm.

8. Tiertränke nach einem der Ansprüche 4 bis 7, **dadurch gekennzeichnet, dass** der Einsatz (17) entweder aus Stahl, vorzugsweise Edelstahl, Aluminium oder Keramik, oder aus einem chemikalienbeständigen, insbesondere laugen- und/ oder säurebeständigen, Kunststoff gebildet ist.

9. Wasserauffangschale für eine Tiertränke mit einem aus Kunststoff gebildeten Schalenteil (16), das wenigstens eine napfartige Vertiefung (18) zur Aufnahme eines Flüssigkeitsvorrats aufweist, **dadurch gekennzeichnet, dass** dem Schalenteil (16) mindestens ein Einsatz (17) aus einem widerstandsfähigerem Material zugeordnet ist.

10. Wasserauffangschale nach Anspruch 9, **gekennzeichnet durch** mindestens ein Merkmal der Ansprüche 1 bis 8.
